(19) Europäisches Patentamt
European Patent Office
Office européen des brevets

(11) **EP 2 312 293 A1**

(12) **EUROPEAN PATENT APPLICATION**

(43) Date of publication:
**20.04.2011 Bulletin 2011/16**

(51) Int Cl.:
***G01N 3/24*** (2006.01)

(21) Application number: **09305991.3**

(22) Date of filing: **19.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Université Paris Diderot - Paris 7
75205 Paris 13 (FR)**

(72) Inventors:
• **Mitrossilis, Démosthène
75020 Paris (FR)**

• **Browaeys, Julien
75011 Paris (FR)**
• **The other inventors have agreed to waive their entitlement to designation.**

(74) Representative: **Vignesoult, Serge L. M.
Cabinet Plasseraud
52, rue de la Victoire
75440 Paris Cedex 09 (FR)**

(54) **Method for determining the response of a contractile or expansible biological material**

(57)     A method for determining the response of a contractile or expansible biological material to a variation of the rigidity of its environment comprising the steps of:
a) placing a sample (100) of the biological material between a force measurement device (200, 500) and a rigid support (300, 600);
b) choosing an effective rigidity value, $k_{eff}$, of the environment of the sample (100);
c) maintaining the contacting area in a constant position by applying a force, F(t), where $F(t) = k_c.\delta(t)$ and where $\delta(t)$ is the stretching of the elastic probe;
- simultaneously translating the rigid support of a distance D(t), where $D(t) = \delta(t).(k_o /k_{eff})$;
- determining the response of the biological material sample (100);

d) repeating steps b) and c) when choosing an effective rigidity value different from former effective rigidity value when the sample (100) remains in situ.

FIG.2.

EP 2 312 293 A1

**Description**

The present invention relates to a method for determining the response of a contractile or expansible biological material to variation of the rigidity (also called stiffness) of its environment.

There is a growing piece of evidence that passive mechanical properties, especially the stiffness of the local environment, influence cellular functions. In particular, substrate rigidity appears to be a key factor controlling cell migration and differentiation and may thus play a major role in the development and maintenance of tissues in vivo, as well as in tissues engineering in vitro.

The same applies to other biological material such as roots or stems.

In order to study the influence of substrate rigidity on biological samples, experiments are performed up to now by using a plurality of substrates of different rigidities.

These experiments are time consuming and expensive because the whole experimental process has to be carried on for each of the substrates, i.e. for each rigidity or stiffness value tested (including tricky biological samples preparations and micromanipulations). Moreover, while current methods allow one to compare the behaviour of different samples facing different rigidities, it is not possible, up to now, to determine the response of a given sample to a sudden change in the stiffness of its environment.

The aim of the present invention is to overcome said disadvantages and to offer a method for determining the response of a contractile or expansible biological material by using a simple, efficient and time saving method.

The object of the present invention is reached thanks to a method for determining the response of a contractile or expansible biological material according to a variable rigidity environment comprising the steps of:

a) placing a sample of the biological material between a force measurement device and a rigid support, wherein:

- the force measurement device measures the force applied by the sample to a contacting area of an elastic probe of the force measurement device and said elastic probe has an elastic response to the said applied force which spring constant is $k_o$;

- the rigid support is translatory movable;

b) choosing an effective rigidity value, $k_{eff}$, of the environment of the sample;

c) maintaining the contacting area in a constant position by applying at the time, t, a force, F(t), where $F(t) = k_o \cdot \delta(t)$ and where $\delta(t)$ is the stretching of the elastic probe;

- simultaneously translating the rigid support of a distance D(t), where $D(t) = \delta(t) \cdot (k_o / k_{eff})$ ;

- determining the response of the biological material sample ;

d) repeating steps b) and c) when choosing an effective rigidity value different from former effective rigidity value when the sample remains in situ.

According to the present invention following wording have to be understood as following:

- "biological material" refers to a biological system consisting of one or a plurality of cells;

- "contractile" refers to the ability to contract or causing contraction, i.e. to decrease in size and to generate force. Contractility of cells or tissues is a well known characteristic for biologists. Muscle is an example of a contractile tissue. The ability of a muscle tissue to contract relates namely in the ability to produce force resulting from different degrees of binding between myosin (thick) and acting (thin) filaments and depends on the concentration of $Ca^{++}$ ions;

- "expansible" refers to the ability to expand or causing expansion, i.e. to increase in size and to generate force. Expansibility of roots or stems is a well known characteristic for biologists;

- "elastic response" refers to the ability of a material to act as a spring of stiffness (also called "spring constant") k. According to an embodiment, a material is characterized by a linear stress-strain relationship, and thus by a Young modulus E. The stiffness k is determined by the value of E and the geometric features (size, shape) of the material. In the frame of the present invention and according to preferred embodiments, the value of the spring constant $k_o$ of the elastic probe is chosen so that the typical forces generated by the biological sample, when contracting or expanding, leads to measurable bending or deflection. For instance, when working with single living cells, typical length scales are in the $\mu$m range and forces are in the nano-Newton range;

- "rigid" refers to a material whose elastic modulus and geometric characteristics are such that it can be regarded as non deformable according to the forces generated by the biological sample when contracting, expanding or being deformed.

Thanks to the present invention, it is now possible to study continuously the behaviour of a biological material according to different rigidity environment when the biological material remains in situ. The effective rigidity of the environment can vary on a very wide range.

Thanks to the present invention, the environment of the biological material may have a variable and/or tunable rigidity.

Experiments can thus be performed on the same biological material sample for numerous, continuously tunable, values of the environment rigidity. The present method is thus time and/or cost effective. Moreover, according to the embodiment of the present invention, it becomes now possible to follow, in real-time, the biological sample response/adaptation to a sudden change in the effective stiffness of its environment.

According to various embodiments that can be combined according to all the possible combinations:

- step c) is performed thanks to a regulation loop;

- the value of $k_{eff}$ is continuously changed over time; according to another embodiment the value of $k_{eff}$ is changed step by step over time;

- the determined response of the sample is the variation of the size, namely the diameter ($\varnothing$) of said sample and/or the force generated by the said sample;

- the determined response of the sample is obtained by simultaneous optical observation;

- the rigid support is a rigid plate rigidly fixed to a movable holder.

According to an embodiment, the elastic probe of the measurement device is an elastically bendable plate comprising a contacting area, an intermediate part and a basis part rigidly fixed to a movable holder; according to said embodiment the plates may be glass plates where the bendable plate is thin and the rigid plate is thick.

According to another embodiment, the elastic probe of the measurement device consists of a dielectric particle actuated by optical tweezers; according to said embodiment the dielectric particle may be a sphere.

The present invention is also directed to a computer program product comprising one or more stored sequence of instruction that is accessible to a processor and which, when executed by the processor, causes the processor to carry out of the steps of the previously mentioned process of the invention and of its various embodiments, and to a computer-readable medium carrying one or more sequences of instructions of said computer program product.

The invention will be better understood from the accompanying non limiting drawings and examples, not necessarily drawn at scale, taken in conjunction with the accompanying description, in which like reference characters refer to similar parts, and in which:

Figures 1 to 4 illustrate schematic top views of embodiments where the force measurement device comprises a two plates mechanical testing device.

Figure 5 illustrates a schematic view where the force measurement device comprises optical tweezers.

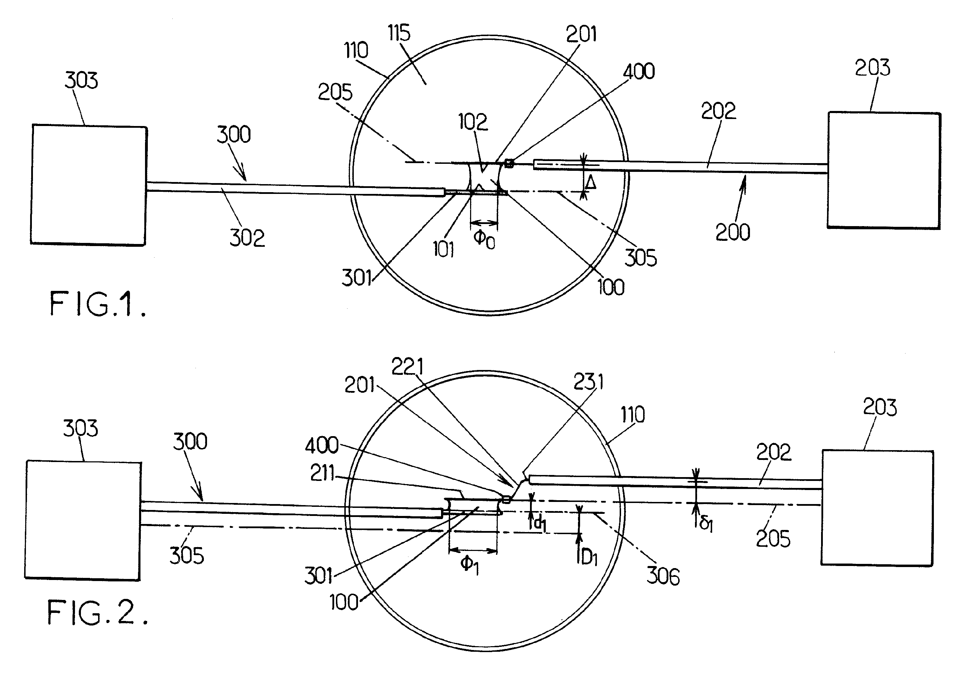

Figure 1 illustrates the initial step of an experiment performed according to the present invention. In this particular example the biological material sample is a single cell 100. The cell 100 has previously been captured and stuck between an elastically bendable plate (first plate) 201 and a rigid plate (second plate) 301. The cell and first and second plates are placed in a chamber 110 filled with essential medium 115 suitable to keep the cell 100 alive.

According to an example the size of the cell 100 is about 10 $\mu$m.

The force measurement device is an elastically bendable plate 201 comprising a contacting area 211, an intermediate part 221 and a basis part rigidly fixed to a movable holder 202. The rigid support is a rigid plate 301 rigidly fixed to a movable holder 302.

A first plane surface 102 of the cell 100 contacts the internal surface of a first part 211 of the first plate 201. According to an example the contacting area 211 surface is about 100 $\mu$m$^2$.

A second plane surface 101 of the cell 100 contacts the internal surface of the second plate 301.

The first and second plates are oriented parallel to each other.

In this example the plates are composed of two parts: a shaped glass plate melted down with a capillary tube. The plates are pulled from a borosilicate glass plate of 10 cm long x 1 mm large x 0.1 to 0.3 mm thick. After being pulled, the plates are cut to remove the tapering tip as well as the most of the unstretched plate portion. Removing the tapering tip allows to stick the cells on a wide rectangular extremity.

Said rectangular extremity is used as the first and second plate of the present invention, according to the thickness of the pulled glass.

Typical size of the first plate 201 which is elastically bendable is 30 $\mu$m large x 5 $\mu$m thick x 6 mm long.

Typical size of the second plate 301 which is rigid is 60 $\mu$m large x 30 $\mu$m thick x 1 mm long.

The first and second plates 201, 202 are rigidly fixed to movable first and second holders 202, 302. Said holders are arms made of stainless steel rods and are movable thanks to piezoelectric devices 203, 303.

Chamber 110 is placed horizontally.

A microscope is placed to observe the cell 100 and the optical axis of said microscope is vertical.

First and second holders 202, 302 are tilted with an angle of about 30° to the microscope stage (60° to the optical axis) so that the glass plates can be surrounded by medium 115.

To ensure that the plates 201, 301 can be settled parallel to the focal plan of the microscope during the experiments, the pulled plates and the capillary tubes are fused with a tilt angle of about 25°.

According to this example the two arms 202, 302 are fixed symmetrically on each side of the optical axis of a Leica DMIRB inverted microscope from Leica Microsystems. Each arm 202, 302 is mounted on a M-UTR46_A precision manual rotation stage from Micro-Controle company. The latter is fixed by a pivot pin on a piezoelectric stage 203, 303 referred as "100 x 100 x 100 $\mu m^3$ travel NanoCube XYZ" from OptoSigna-Photonetics Company. The two manual rotations allow the micro-plates 201, 301 to be parallel to each other and to the optical axis. Translation in the three space directions are achieved by XYZ (three directional) stages for rough (micrometer precision) positioning of the plates before the beginning of the assays, while piezoelectric stages allow fine computer controlled displacements (with a sub-micronic precision).

The chamber 110 is a stainless steel box with a glass window allowing optical visualization.

The whole setup is enclosed in a Plexiglas box maintained at 37° plus/minus 0.2°, and lies on an active anti-vibration table which itself is supported by a stiff optical table.

The micro-plates 201, 301 with the cell 100 in between are visualized under bright light illumination with a Plan Fluctar L 63 x /0.70 objective and a Micromax digital charge-coupled device (CCD) camera from Princeton Instruments.

The position of the first part 211 of the first plate 201, said first part 211 contacting the biological sample, is determined thanks to a Photo Sensitive Device (PSD), S3979 from Hamamatsu, placed in zone 400.

Other movements and/or applied loads are determined thanks to the piezoelectric devices 203, 303.

The initial distance, $\Delta$, between the first part 211 of the first plate and the second plate 301 may be measured. The initial position of the internal surface of the first part 211 defines a vertical plane comprising an axis 205. The initial position of the internal surface of the rigid plate 301 defines a vertical plane, parallel to preceding plane, comprising an axis 305. The axis 205 and 305 are disposed in a same horizontal plane.

The cell thickness d is given by the distance between said two axes 205 and 305.

The initial diameter of the cell 100 is $\varnothing_0$.

A rigidly index $\alpha$ is chosen, where $\alpha$ is defined as $\alpha = k_{eff}/(k_o + k_{eff})$ and where $0 \leq \alpha \leq 1$, and is entered in a computer system suitable to provide a regulation loop on the experimental device.

The cell 100 contracts over the time, t, as shown on figure 2. It pulls on both plates and the cell thickness is d(t).

Following displacements are measured over the time:

p(t) is the position variation of the internal surface of the first part 211 of the first plate 201 (i.e. the variation of the position of axis 205) ; p(t)is measured thanks to the PSD in zone 400;

D(t) is the position variation of the internal surface of the rigid plate 301 (i.e. that of axis 305); D(t) is measured thanks to position variation of arm holder 302 captured by piezoelectric stage 303;

$\delta$ (t) is the position variation of the basis part 231 of the first plate; $\delta$ (t) is measured thanks to position variation of arm holder 202 captured by piezoelectric stage 203.

It has to be understood that the wording "internal" is used to designate the side of a plate which is contacting the cell 100.

Displacements are applied to the first and second holders 202, 302 so that the first part 211 of the first plate 201 is maintained at its initial position, i.e. p = 0.

According to a first embodiment shown on figure 2, $\alpha$ # 0 and $\alpha \neq 1$.

At a given step of the process, after measuring the actual p(t) value, a feedback loop correction C(t) is applied to the system so as a displacement, $\delta$ (t) = $\alpha$. C (t),is applied to the basis part 231 of the first plate 201, and so as a displacement $D_1(t) = (1 - \alpha)$ . C(t) is applied to the rigid plate 301.

The system then acts as if the cell was facing an elastically bendable plate of an effective stiffness:

$$k_{eff} = \frac{\alpha}{1 - \alpha} \cdot k_0$$

One can also determine corresponding cell thickness d1 and diameter ø1.

According to a first example, one chooses $k_{eff} = k_o$. The applied force is F(t) = $k_o$. $\delta_1$ (t) and $D_1$ (t) = $\delta_1$ (t). According to this embodiment $\alpha$ = 0.5 and C(t) = 2 . $\delta_1$ (t).

According to a second example, one chooses $k_{eff} = 5$ . $k_o$. The applied force is F(t) = $k_o$ . $\delta_1$ (t) and $D_1$ (t) = $\delta_1$ (t) /5. According to this embodiment $\alpha$ = 0.83 and C (t) = 1.2 . $\delta_1$ (t).

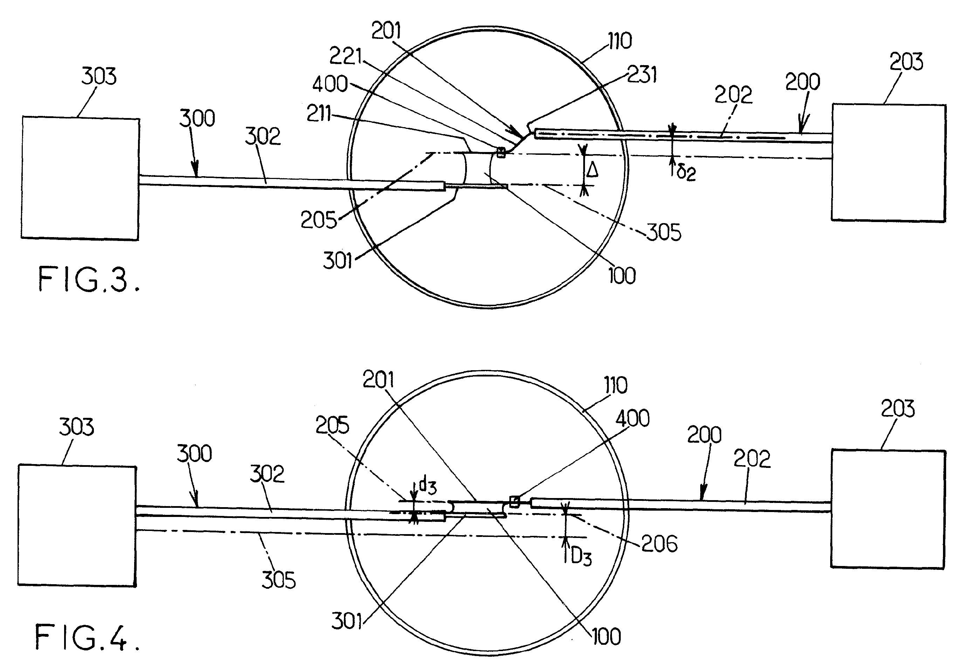

According to a second embodiment shown on figure 3, $\alpha$ = 1. The position of the rigid plate 301 remains constant so as the cell thickness remains equal to $\Delta$.

The position of the basis part 231 of the first plate 201 is submitted to a displacement $\delta_2$ (t) = C(t)

According to this second embodiment, the system acts as an effective rigidity environment for the cell where the substrate rigidity is infinite.

According to a third embodiment shown on figure 4, $\alpha$ = 0. The position of the rigid plate 301 is moved so as the position of the basis part 231 of the first plate 201 remains constant, thus $\delta_3$ (t) = 0.

Corresponding displacement of the rigid plate 301 is D3 (t) = C (t).

According to this third embodiment, the system acts as an effective rigidity environment for the cell where the substrate rigidity is nil.

It is thus possible to study the cell behaviour over the whole effective rigidity range.

The embodiment of figure 1 to 4 is a non limiting example regarding embodiments where the force measurement device comprises a two plates mechanical testing device.

According to another embodiment of the invention, the first plate which is elastically bendable is a cantilever of a single cell force spectrometer such as Cell-Hesion® apparatus commercialized by JPK Instruments, for example a CellHesion® 200 apparatus.

According to another embodiment of the invention, the first plate which is elastically bendable is a cantilever of an atomic force microscope (AFM). The elastically bendable plate may be a metallic plate, as for example a 50 $\mu$m thick plate which length may be about 0.5 mm.

The cantilever of the AFM may optionally comprise an indenter, such as a silica sphere.

Local tips of AFM may also be used.

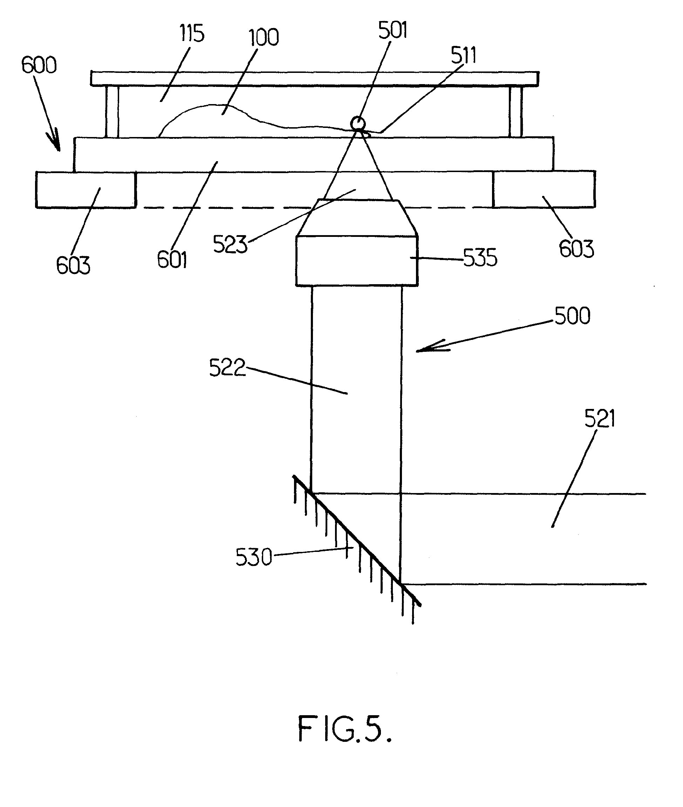

Figure 5 illustrates an embodiment of the present invention where the elastic probe of the measurement device, 500, consists of a dielectric spherical particle, 501, actuated by optical tweezers.

Optical tweezers are capable of manipulating nanometer and micrometer-sized dielectric particles by exerting extremely small forces via a highly focused laser beam. The beam is typically focused by sending it through a microscope objective. The narrowest point of the focused beam, known as the beam waist, contains a very strong electric field gradient. It turns out that dielectric particles are attracted along the gradient to the regions of strongest electric field, which is the center of the beam. The laser light also tends to apply a force on particles in the beam along the direction of beam propagation. It is easy to understand why if one considers light to be a group of particles, each impinging on the tiny dielectric particle in its path. This is known as the scattering force and results in the particle being displaced slightly downstream from the exact position of the beam waist.

Optical traps are very sensitive instruments and are capable of the manipulation and detection of subnanometer displacements for sub-micrometre dielectric particles. For quantitative scientific measurements, most optical traps are operated in such a way that the dielectric particle rarely moves far from the trap center. The reason for this is that the force applied to the particle is linear with respect to its displacement from the center of the trap as long as the displacement is small. In this way, an optical trap can be compared to a simple spring, which follows Hooke's law and has a spring constant $k_o$.

Said dielectric particle displaced thanks to optical tweezers can be used as elastic probe and be a component of a measurement device.

Detailed embodiments of optical tweezers are disclosed for example in following publications which are hereby enclosed by reference:

- *"A revolution in optical manipulation"* - David G. Grier - Nature / Vol 424 / 14 August 2003;

- *"Optical trapping"* - Keir C. Neuman and Steven M. Block - Review of Scientific Instruments, Volume 75, n°9, September 2004.

As shown on the embodiment of Figure 5, a laser beam 521 is reflected on a tiltable mirror 530 and the reflected beam 522 is focused thanks to an optical lens device 535 so as the focus beam 523 converges on a dielectric spherical particle 501.

According to an example, the dielectric spherical particle 501 has a 2 $\mu$m diameter.

Said particle 501 contacts a biological sample 100 in a contacting area 511. According to an example, the contacting surface is about 1 $\mu m^2$.

The biological sample 100 is surrounded by a biological medium 115, such as salted culture medium. Said sample 100 is arranged on a rigid support 600. The rigid support 600 consists of a rigid plate 601, as for example a thick glass plate, placed on a rigid annular spacer 603. The rigid spacer may be arranged on a piezoelectric stage, as those previously exemplified.

The rigid support 600 is translatory movable, in a direction perpendicular and/or parallel to the main surface of the rigid plate 601.

The tilt of the mirror 530 induces a displacement of the trap center and then elastically reacts to the force applied by the sample 100 in the contacting area 511.

The mirror 530 can be for example a galvanometric mirror which rotation, i.e. tilt, can be fine tuned and be actuated as a component of a regulation loop.

Experiments can thus be performed in situ on the same biological material sample for numerous, continuously tunable, values of the environment rigidity. Following, in real-time, the biological sample response/adaptation to a sudden change in the effective stiffness of its environment is then possible.

According to other embodiments of the invention, one can arrange a microscope so as to observe the cell through the plates and where the plates are for example disposed in a horizontal plane perpendicular to the optical axis.

Furthermore it is possible to carry on fluorescence studies monitoring cellular functions while performing simultaneously the process of the invention.

The exemplified embodiments are non limiting embodiments and the method of the invention can be implemented on a wide number of systems so as to study contractile or expansible biological materials.

## Claims

1. A method for determining the response of a contractile or expansible biological material to a variation of the rigidity of its environment comprising the steps of:

    a) placing a sample (100) of the biological material between a force measurement device (200, 500) and a rigid support (300, 600), wherein:

        - the force measurement device (200, 500) measures the force applied by the sample (100) to a contacting area (211, 511) of an elastic probe (201, 501) of the force measurement device (200, 500) and said elastic probe (201, 501) has an elastic response to the said applied force which spring constant is $k_o$;
        - the rigid support (300, 600) is translatory movable;

    b) choosing an effective rigidity value, $k_{eff}$, of the environment of the sample (100);
    c) maintaining the contacting area (211, 511) in a constant position by applying at the time, t, a force, F(t), where $F(t) = k_o . \delta (t)$ and where $\delta (t)$ is the stretching of the elastic probe (201, 501);

        - simultaneously translating the rigid support (300, 600) of a distance D(t), where $D(t) = \delta (t). (k_o /k_{eff})$;
        - determining the response of the biological material sample (100);

    d) repeating steps b) and c) when choosing an effective rigidity value different from former effective rigidity value when the sample (100) remains in situ.

2. The method of claim 1 wherein the contractile material is a cell, an aggregate of cells or a living tissue.

3. The method of claim 1 wherein the expansible material is a root or a stem.

4. The method of any of preceding claims wherein step c) is performed thanks to a regulation loop.

5. The method of any of preceding claims wherein the value of $k_{eff}$ is continuously changed over time.

6. The method of any of claims 1 to 4 wherein the value of $k_{eff}$ is changed step by step over time.

7. The method of any of preceding claims wherein the determined response of the sample (100) is the variation of the size, namely the diameter ($\varnothing$) of said sample (100) and/or the force, F(t), generated by the said sample.

8. The method of any of preceding claims wherein the determined response of the sample (100) is obtained by simultaneous optical observation.

9. The method of any of preceding claims wherein the rigid support is a rigid plate (301) rigidly fixed to a movable holder (302).

10. The method of any of preceding claims wherein the elastic probe of the measurement device is an elastically bendable plate (201) comprising a contacting area (211), an intermediate part (221) and a basis part (231) rigidly fixed to a movable holder (202).

11. The method of claims 9 and 10 combined wherein the plates (201, 301) are glass plates where the bendable plate (201) is thin and the rigid plate (301) is thick.

12. The method of any of claims 1 to 9 wherein the elastic probe of the measurement device consists of a dielectric particle actuated by optical tweezers.

13. The method of preceding claim where the dielectric particle is a sphere.

14. A computer program product comprising one or more stored sequence of instruction that is accessible to a processor and which, when executed by the processor, causes the processor to carry out the steps of any of claims 1 to 13.

15. A computer-readable medium carrying one or more sequences of instructions of the computer program product of claim 14.

FIG.1.

FIG.2.

FIG.3.

FIG.4.

EP 2 312 293 A1

FIG.5.

EP 2 312 293 A1

Europäisches
Patentamt
European
Patent Office
Office européen
des brevets

**EUROPEAN SEARCH REPORT**

Application Number

EP 09 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | O. THOUMINE: "time scale dependent viscoelastic and contractile regimes in fibroplasts probed by microplate manipulation" JOURNAL OF CELL SCIENCE, vol. 110, 12 December 1997 (1997-12-12), pages 2109-2116, XP002572192 * the whole document * | 1-15 | INV. G01N3/24 |
| A | THOUMINE O ET AL: "Microplates: a new tool for manipulation and mechanical perturbation of individual cells" JOURNAL OF BIOCHEMICAL AND BIOPHYSICAL METHODS, AMSTERDAM, NL, vol. 39, 1 January 1999 (1999-01-01), pages 47-62, XP002227568 ISSN: 0165-022X * the whole document * | 1 | |
| A | MOORE S W: "A FIBER OPTIC SYSTEM FOR MEASURING DYNAMIC MECHANICAL PROPERTIES OFEMBRYONIC TISSUES" IEEE TRANSACTIONS ON BIOMEDICAL ENGINEERING, IEEE SERVICE CENTER, PISCATAWAY, NJ, US, vol. 41, no. 1, 1 January 1994 (1994-01-01), pages 45-50, XP000448133 ISSN: 0018-9294 * figure 1 * | 1 | TECHNICAL FIELDS SEARCHED (IPC) G01N |

-/--

The present search report has been drawn up for all claims

| Place of search | Date of completion of the search | Examiner |
|---|---|---|
| The Hague | 15 March 2010 | Cantalapiedra, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 09 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PULLARKAT ET AL: "Rheological properties of the Eukaryotic cell cytoskeleton" PHYSICS REPORTS, NORTH-HOLLAND, vol. 449, no. 1-3, 4 July 2007 (2007-07-04), pages 29-53, XP022141783 ISSN: 0370-1573 * paragraph [02.8] * | 1 | |
| A | EP 2 023 119 A1 (UNIV BAYREUTH [DE]) 11 February 2009 (2009-02-11) * the whole document * | 1 | |
| A | DEOK-HO KIM ET AL: "Microengineered platforms for cell mechanobiology" ANNUAL REVIEW OF BIOMEDICAL ENGINEERING, vol. 11, 13 April 2009 (2009-04-13), pages 203-233, XP002572393 * paragraphs [04.5] - [0005] * | 1 | |
| A | DE 38 06 690 A1 (BAECKMANN REINHARD [DE]) 3 November 1988 (1988-11-03) * figure 1 * | 1 | TECHNICAL FIELDS SEARCHED (IPC) |
| A | US 5 003 982 A (HALPERIN HENRY R [US]) 2 April 1991 (1991-04-02) * the whole document * | 1 | |
| A | US 2009/019950 A1 (DINGMANN DAVID L [US] ET AL) 22 January 2009 (2009-01-22) * paragraph [0024] * | 1 | |
| A | US 6 107 081 A (FEEBACK DANIEL L [US] ET AL) 22 August 2000 (2000-08-22) * the whole document * | 1-15 | |

-/--

The present search report has been drawn up for all claims

| Place of search | Date of completion of the search | Examiner |
|---|---|---|
| The Hague | 15 March 2010 | Cantalapiedra, Igor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 09 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/151581 A1 (UNIV KARLOVA [CZ]; DOUBAL STANISLAV [CZ]; KLEMERA PETR [CZ]; REJCHRT P) 18 December 2008 (2008-12-18) * the whole document * | 1 | |
| A | US 6 532 805 B1 (KOKAWA RYOHEI [JP] ET AL) 18 March 2003 (2003-03-18) * figures 1-14 * | 1-8 | |

TECHNICAL FIELDS
SEARCHED      (IPC)

The present search report has been drawn up for all claims

| Place of search | Date of completion of the search | Examiner |
|---|---|---|
| The Hague | 15 March 2010 | Cantalapiedra, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 30 5991

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2010

| Patent document cited in search report | | Publication date | Patent family member(s) | | Publication date |
|---|---|---|---|---|---|
| EP 2023119 | A1 | 11-02-2009 | WO | 2009021923 A1 | 19-02-2009 |
| DE 3806690 | A1 | 03-11-1988 | NONE | | |
| US 5003982 | A | 02-04-1991 | NONE | | |
| US 2009019950 | A1 | 22-01-2009 | WO | 2009014942 A1 | 29-01-2009 |
| US 6107081 | A | 22-08-2000 | NONE | | |
| WO 2008151581 | A1 | 18-12-2008 | NONE | | |
| US 6532805 | B1 | 18-03-2003 | JP | 3723681 B2 | 07-12-2005 |
| | | | JP | 11258131 A | 24-09-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **David G.** A revolution in optical manipulation. *Grier - Nature,* 14 August 2003, vol. 424

- **Keir C. Neuman ; Steven M. Block.** Optical trapping. *Review of Scientific Instruments,* September 2004, vol. 75 (9